# EUROPEAN PATENT SPECIFICATION

(11) **EP 3 767 230 B1**
(45) Date of publication and mention of the grant of the patent: **08.03.2023**
(21) Application number: 20181787.1
(22) Date of filing: 23.06.2020
(51) Int. Cl.: G01C 11/04, G01C 23/00, G08G 5/00, G06V 10/25, G06V 20/13

(54) **METHOD AND SYSTEM TO DISPLAY OBJECT LOCATIONS DURING A SEARCH AND RESCUE OPERATION**
VERFAHREN UND SYSTEM ZUR ANZEIGE VON OBJEKTSTANDORTEN WÄHREND EINER SUCH- UND RETTUNGSOPERATION
PROCÉDÉ ET SYSTÈME POUR AFFICHER DES EMPLACEMENTS D'OBJETS PENDANT UNE OPÉRATION DE RECHERCHE ET DE SAUVETAGE

(30) Priority: 16.07.2019 US 201916513061
(43) Date of publication of application: 20.01.2021
(73) Proprietor: Honeywell International Inc., Charlotte, NC 28202 (US)
(72) Inventor: CONSTANTINO, Fabian, Morris Plains, NJ 07950 (US); SUDDRETH, John G., Morris Plains, NJ 07950 (US); VERVERS, Patricia May, Morris Plains, NJ 07950 (US); HASANABADA, Sindhusree, Morris Plains, NJ 07950 (US); VISWANATHA, Kaushik, Morris Plains, NJ 07950 (US); P, Veeresha, Morris Plains, NJ 07950 (US); MAJI, Sanjib Kumar, Morris Plains, NJ 07950 (US)
(74) Representative: LKGlobal UK Ltd.

(56) References cited:
- US-A1- 2007 188 653
- US-A1- 2018 259 960
- US-A1- 2019 043 217
- US-A1- 2019 164 019

## Description

### TECHNICAL FIELD

The present invention generally relates to aircraft operations, and more particularly relates to displaying object locations during a search and rescue operation.

### BACKGROUND

In search and rescue operations, aircrew members of a search aircraft do not have an adequate method for estimating the distance to targets spotted during searches and they have no way of accurately marking the positions. This causes an increase in errors and can add a significant amount of time needed in search and rescue operations. It also leaves room for measurement and estimation errors which could lead to miscommunication of target location to other operators. Hence, there is a need for displaying object locations during a search and rescue operation.

US2018259960A1 discloses an unmanned aerial vehicle (UAV) that can include one or more cameras for capturing image data within a field of view that depends in part upon the location and orientation of the UAV. At least a portion of the image data can be processed on the UAV to locate objects of interest, such as people or cars, and use that information to determine where to fly the drone in order to capture higher quality image data of those or other such objects. Once identified, the objects of interest can be counted, and the density, movement, location, and behavior of those objects identified. This can help to determine occurrences such as traffic congestion or unusual patterns of pedestrian movement, as well as to locate persons, fires, or other such objects. The data can also be analyzed by a remote system or service that has additional resources to provide more accurate results.

US2007188653A1 discloses an image capture system comprising a plurality of cameras and a camera mount. The camera mount has a curved portion, and the plurality of cameras are secured to the curved portion. The cameras are oriented radially inward relative to the curved portion of the camera mount, such that the lines of sight of the cameras intersect. Images are captured substantially simultaneously with the plurality of cameras. The captured images are stitched together to form a collective image. The image capture system may be positioned in an aerial vehicle to provide overhead views of an environment, and captured images may be transmitted to a remote location for viewing in substantially real time. A remote user may indicate a region of interest within the collective image, and the image capture system may render a portion of the collective image in accordance with the user's indications.

US2019043217A1 discloses a system for automated geospatial image analysis comprising a deep learning model that receives orthorectified geospatial images, pre-labeled to demarcate objects of interest. The module presents marked geospatial images and a second set of unmarked, optimized, training geospatial images to a convolutional neural network. This process may be repeated so that an image analysis software module can detect multiple object types or categories. The image analysis software module receives orthorectified geospatial images from one or more geospatial image caches. Using a multi-scale sliding window submodule, image analysis software scans geospatial images, detects objects present and geospatially locates them.

US2019164019A1 discloses systems and techniques for gathering information on the health of individuals trapped in an accident to provide actionable information to a first responder system. In some implementations, a monitoring system monitors a property that includes sensors located at the property and generate first sensor data. A monitor control unit receives the first sensor data and generates an alarm event for the property based on the first sensor data. Based on generating the alarm event for the property, the monitor control unit dispatches an autonomous drone. The autonomous drone is configured to navigate the property. Using an onboard sensor, the autonomous drone generates second sensor data. Based on the second sensor data, the autonomous drone determines a location within the property where a person is likely located. The autonomous drone provides, for output, data indicating the location within the property where the person is likely located.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for identifying objects of interest during an air search and rescue (SAR) operation. The method is defined in Claim 1.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a diagram of an aircraft system for detecting and displaying object locations during a search and rescue operation in accordance with one embodiment;
FIG. 2 is a functional block diagram of an on-board aircraft computing system in accordance with one embodiment;
FIG. 3 is a detailed block diagram of an on-board aircraft computing system in accordance with one embodiment;
FIG. 4 is a depiction of a visual display of a SAR pattern with probable objects of interest detected in accordance with one embodiment;
FIG. 5 is a depiction of a visual display of a SAR pattern with confirmed objects of interest in accordance with one embodiment;
FIG. 6 is a depiction of a user input display for categorizing objects of interest in accordance with one embodiment;
FIG. 7 is a depiction of an advanced vision system (AVS) with multiple confirmed objects of interest in accordance with one embodiment;
FIG. 8 is a depiction of an AVS with a designated region of interest and object tracking display in accordance with one embodiment;
FIGS. 9A and 9B are depictions of an AVS displayed in tandem with a navigation (NAV) display respectively in accordance with one embodiment; and
FIG. 10 is a flowchart of a method for identifying objects of interest during an air search and rescue operation in accordance with one embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A method and system for locating and identifying objects of interest during search and rescue (SAR) air operation has been developed. Objects of interest near a SAR search pattern are detected with sensors on board a search aircraft. The location of each object is input into a visual display system and shown to an aircrew member on a visual display system onboard the aircraft. The flight management system (FMS) of the aircraft may automatically add distinctive symbols that categorize the objects of interest on the display. In another approach, the sensor system adds the distinct symbols that categorize the object of interest to the visual display system. The aircrew member confirms that the distinctive symbols accurately categorize each object. The visual display is stored within the system memory for the use by aircraft crew members. The visual display is transmitted along with the distinctive symbols to a ground-based controller or an aircraft coordinator (ACO) who is controlling the SAR operation.

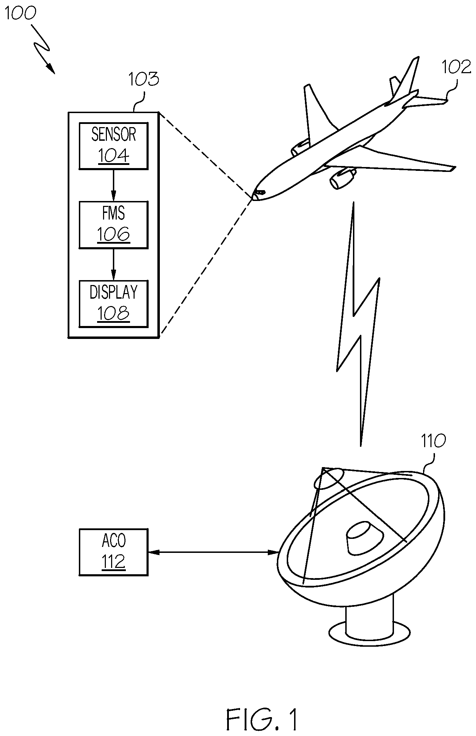

FIG. 1 is a diagram of an aircraft system 100 for detecting and displaying object locations during a SAR operation in accordance with one embodiment. The aircraft 102 contains an onboard computing system 103 that locates and identifies objects of interest within the SAR search pattern. The computing system 103 includes onboard sensor(s) 104 that detect an object of interest. The location of the object is input into a visual display system 108 that is shown to the aircrew member. A distinctive symbol is automatically added to categorize the object. In some embodiments, the distinct symbols are added by the FMS 106. The aircrew member confirms the symbol accurately categorizes the object of interest by reviewing on the visual display system 108. The contents of the visual display system 108 is then transmitted to an ACO 112 via a ground receiver 110 is some embodiments.

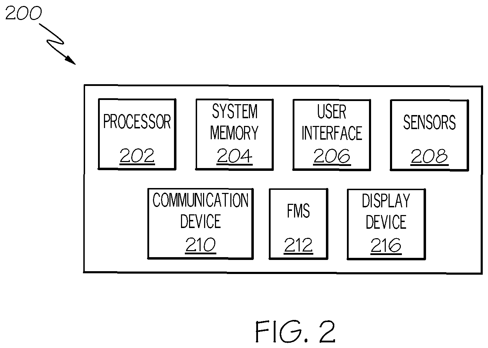

FIG. 2 is a functional block diagram of a computing device 200, in accordance with the disclosed embodiments. It should be noted that the computing device 200 is represented by the on-board aircraft computing system 103 depicted in FIG. 1. In this regard, the computing device 200 shows certain elements and components of the computing device 103 in more detail.

The computing device 200 generally includes, without limitation: at least one processor 202; system memory 204; a user interface 206; a plurality of sensors 208; a communication device 210; an FMS 212; and a display device 216. These elements and features of the computing device 200 may be operatively associated with one another, coupled to one another, or otherwise configured to cooperate with one another as needed to support the desired functionality. For ease of illustration and clarity, the various physical, electrical, and logical couplings and interconnections for these elements and features are not depicted in FIG. 2. Moreover, it should be appreciated that embodiments of the computing device 200 will include other elements, modules, and features that cooperate to support the desired functionality. For simplicity, FIG. 2 only depicts certain elements that are described in more detail below.

The at least one processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 202 may be realized as one or more microprocessors, controllers, microcontrollers, or state machines. Moreover, the at least one processor 202 may be implemented as a combination of computing devices, e.g., a combination of digital signal processors and microprocessors, a plurality of microprocessors, one or more microprocessors in conjunction with a digital signal processor core, or any other such configuration.

The at least one processor 202 is communicatively coupled to the system memory 204. The system memory 204 is configured to store any obtained or generated data associated with generating alerts to redirect user attention from the computing device 200 to a critical or high-priority flight situation. The system memory 204 may be realized using any number of devices, components, or modules, as appropriate to the embodiment. Moreover, the computing device 200 could include system memory 204 integrated therein and/or a system memory 204 operatively coupled thereto, as appropriate to the particular embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the computing device 200. The system memory 204 can be coupled to the at least one processor 202 such that the at least one processor 202 can read information from, and write information to, the system memory 204. In the alternative, the system memory 204 may be integral to the at least one processor 202. As an example, the at least one processor 202 and the system memory 204 may reside in a suitably designed application-specific integrated circuit (ASIC).

The user interface 206 may include or cooperate with various features to allow a user to interact with the computing device 200. Accordingly, the user interface 206 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the computing device 200. For example, the user interface 206 could be manipulated by an operator to provide flight data parameters during the operation of electronic flight bag (EFB) applications, as described herein.

In certain embodiments, the user interface 206 may include or cooperate with various features to allow a user to interact with the computing device 200 via graphical elements rendered on a display element (e.g., the display device 216). Accordingly, the user interface 206 may initiate the creation, maintenance, and presentation of a graphical user interface (GUI). In certain embodiments, the display device 216 implements touch-sensitive technology for purposes of interacting with the GUI. Thus, a user can manipulate the GUI by moving a cursor symbol rendered on the display device 216, or by physically interacting with the display device 216 itself for recognition and interpretation, via the user interface 206.

The plurality of sensors 208 is configured to obtain data associated with active use of the computing device 200, and may include, without limitation: touchscreen sensors, accelerometers, gyroscopes, or the like. Some embodiments of the computing device 200 may include one particular type of sensor, and some embodiments may include a combination of different types of sensors. Generally, the plurality of sensors 208 provides data indicating whether the computing device 200 is currently being used. Touchscreen sensors may provide output affirming that the user is currently making physical contact with the touchscreen (e.g., a user interface 206 and/or display device 216 of the computing device 200), indicating active use of the computing device. Accelerometers and/or gyroscopes may provide output affirming that the computing device 200 is in motion, indicating active use of the computing device 200.

The communication device 210 is suitably configured to communicate data between the computing device 200 and one or more remote servers and one or more avionics systems onboard an aircraft. The communication device 210 may transmit and receive communications over a wireless local area network (WLAN), the Internet, a satellite uplink/downlink, a cellular network, a broadband network, a wide area network, or the like. As described in more detail below, data received by the communication device 210 may include, without limitation: avionics systems data and aircraft parameters (e.g., a heading for the aircraft, aircraft speed, altitude, aircraft position, ascent rate, descent rate, a current flight plan, a position of air spaces around a current flight plan, and activity of the air spaces around a current flight plan), and other data compatible with the computing device 200. Data provided by the communication device 210 may include, without limitation, requests for avionics systems data, alerts and associated detail for display via an aircraft onboard display, and the like.

The display device 216 is configured to display various icons, text, and/or graphical elements associated with alerts related to situations requiring user attention, wherein the situations are associated with a device or system that is separate and distinct from the computing device 200. In an exemplary embodiment, the display device 216 and the user interface 206 are communicatively coupled to the at least one processor 202. The at least one processor 202, the user interface 206, and the display device 216 are cooperatively configured to display, render, or otherwise convey one or more graphical representations or images associated with high-priority or critical flight situation alerts on the display device 216, as described in greater detail below. In an exemplary embodiment, the display device 216 is realized as an electronic display configured to graphically display critical flight situation alerts and associated detail, as described herein. In some embodiments, the computing device 200 is an integrated computer system onboard an aircraft, and the display device 216 is located within a cockpit of the aircraft and is thus implemented as an aircraft display. In other embodiments, the display device 216 is implemented as a display screen of a standalone, personal computing device (e.g., laptop computer, tablet computer). It will be appreciated that although the display device 216 may be implemented using a single display, certain embodiments may use additional displays (i.e., a plurality of displays) to accomplish the functionality of the display device 216 described herein.

The FMS 212, as is generally known, is a specialized computer that automates a variety of in-flight tasks such as in-flight management of the flight plan. Using various sensors such as global positioning system (GPS), the FMS 212 determines the aircraft's position and guides the aircraft along its flight plan using its navigation database. From the cockpit, the FMS 212 is normally controlled through a visual display device such as a control display unit (CDU) which incorporates a small screen, a keyboard or a touchscreen. The FMS 212 displays the flight plan and other critical flight data to the aircrew during operation.

The FMS 212 may have a built-in electronic memory system that contains a navigational database. The navigation database contains elements used for constructing a flight plan. In some embodiments, the navigation database may be separate from the FMS 212 and located onboard the aircraft while in other embodiments the navigation database may be located on the ground and relevant data provided to the FMS 212 via a communications link with a ground station. The navigation database used by the FMS 212 may typically include: waypoints/intersections; airways; radio navigation aids/navigation beacons; airports; runway; standard instrument departure (SID) information; standard terminal arrival (STAR) information; holding patterns; and instrument approach procedures. Additionally, other waypoints may also be manually defined by pilots along the route.

The flight plan is generally determined on the ground before departure by either the pilot or a dispatcher for the owner of the aircraft. It may be manually entered into the FMS 212 or selected from a library of common routes. In other embodiments the flight plan may be loaded via a communications data link from an airline dispatch center. During preflight planning, additional relevant aircraft performance data may be entered including information such as: gross aircraft weight; fuel weight and the center of gravity of the aircraft. The aircrew may use the FMS 212 to modify the plight flight plan before takeoff or even while in flight for variety of reasons. Such changes may be entered via the CDU. Once in flight, the principal task of the FMS 212 is to accurately monitor the aircraft's position. This may use a GPS, a VHF omnidirectional range (VOR) system, or other similar sensor in order to determine and validate the aircraft's exact position. The FMS 212 constantly cross checks among various sensors to determine the aircraft's position with accuracy.

Additionally, the FMS 212 may be used to perform advanced vertical navigation (VNAV) functions. The purpose of VNAV is to predict and optimize the vertical path of the aircraft. The FMS 212 provides guidance that includes control of the pitch axis and of the throttle of the aircraft. In order to accomplish these tasks, the FMS 212 has detailed flight and engine model data of the aircraft. Using this information, the FMS 212 may build a predicted vertical descent path for the aircraft. A correct and accurate implementation of VNAV has significant advantages in fuel savings and on-time efficiency.

In exemplary embodiments, an existing flight management computer (FMC) (or flight management system (FMS)) onboard an aircraft is utilized to communicate data between existing onboard avionics systems or line-replaceable units (LRUs) and another module coupled to the FMC, which supports or otherwise performs new flight management functionality that is not performed by the FMC. For example, a multifunction control and display unit (MCDU) may support or otherwise perform new flight management functionality based on data from onboard avionics or LRUs received via the FMC. In this regard, the FMC is configured to receive operational or status data from one or more avionics systems or LRUs onboard the aircraft at corresponding avionics interfaces and convert one or more characteristics of the operational data to support communicating the operational data with the MCDU. For purposes of explanation, the subject matter may primarily be described herein in the context of converting operational data received from onboard avionics or LRUs in a first format (e.g., an avionics bus format) into another format supported by the interface with the MCDU, the subject matter described herein is not necessarily limited to format conversions or digital reformatting, and may be implemented in an equivalent manner for converting between other data characteristics, such as, for example, different data rates, throughputs or bandwidths, different sampling rates, different resolutions, different data compression ratios, and the like.

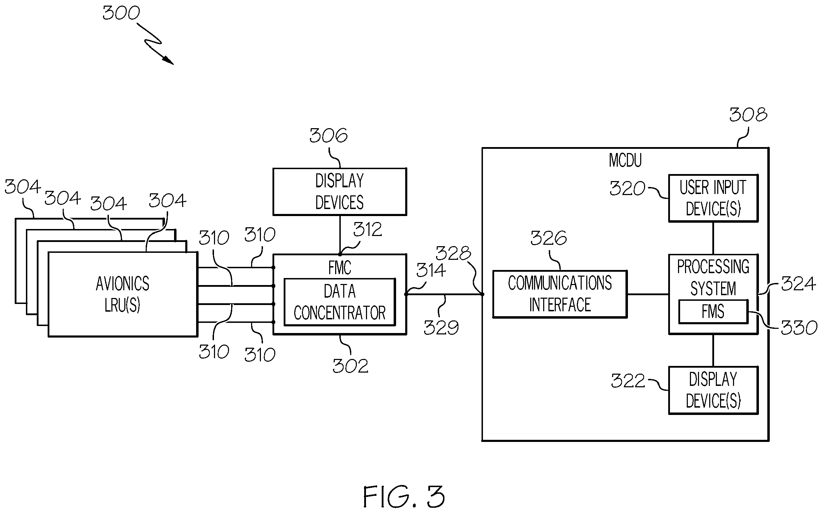

FIG. 3 depicts a detailed block diagram 300 of an on-board aircraft computing system in accordance with one embodiment. The block diagram shows the computing device 200 previously shown in FIG. 2 in greater detail. The illustrated aircraft system 300 includes a flight management computing module 302 communicatively coupled to a plurality of onboard avionics LRUs 304, one or more display devices 306, and a multifunction computing module 308. It should be appreciated that FIG. 3 depicts a simplified representation of the aircraft system 300 for purposes of explanation, and FIG. 3 is not intended to limit the subject matter in any way.

The flight management computing module 302 generally represents the FMC, the FMS, or other hardware, circuitry, logic, firmware and/or other components installed onboard the aircraft and configured to perform various tasks, functions and/or operations pertaining to flight management, flight planning, flight guidance, flight envelope protection, four-dimensional trajectory generation or required time of arrival (RTA) management, and the like. Accordingly, for purposes of explanation, but without limiting the functionality performed by or supported at the flight management computing module 302, the flight management computing module 302 may alternatively be referred to herein as the FMC. The FMC 302 includes a plurality of interfaces 310 configured to support communications with the avionics LRUs 304 along with one or more display interfaces 312 configured to support coupling one or more display devices 306 to the FMC 302. In the illustrated embodiment, the FMC 302 also includes a communications interface 314 that supports coupling the multifunction computing module 308 to the FMC 302.

The FMC 302 generally includes a processing system designed to perform flight management functions, and potentially other functions pertaining to flight planning, flight guidance, flight envelope protection, and the like. Depending on the embodiment, the processing system could be realized as or otherwise include one or more processors, controllers, application specific integrated circuits, programmable logic devices, discrete gate or transistor logics, discrete hardware components, or any combination thereof. The processing system of the FMC 302 generally includes or otherwise accesses a data storage element (or memory), which may be realized as any sort of non-transitory short or long term storage media capable of storing programming instructions for execution by the processing system of the FMC 302. In exemplary embodiments, the data storage element stores or otherwise maintains code or other computer-executable programming instructions that, when read and executed by the processing system of the FMC 302, cause the FMC 302 to implement, generate, or otherwise support a data concentrator application 316 that performs certain tasks, operations, functions, and processes described herein.

The avionics LRUs 304 generally represent the electronic components or modules installed onboard the aircraft that support navigation, flight planning, and other aircraft control functions in a conventional manner and/or provide real-time data and/or information regarding the operational status of the aircraft to the FMC 302. For example, practical embodiments of the aircraft system 300 will likely include one or more of the following avionics LRUs 304 suitably configured to support operation of the aircraft: a weather system, an air traffic management system, a radar system, a traffic avoidance system, an autopilot system, an autothrottle (or autothrust) system, a flight control system, hydraulics systems, pneumatics systems, environmental systems, electrical systems, engine systems, trim systems, lighting systems, crew alerting systems, electronic checklist systems, and/or another suitable avionics system.

In exemplary embodiments, the avionics interfaces 310 are realized as different ports, terminals, channels, connectors, or the like associated with the FMC 302 that are connected to different avionics LRUs 304 via different wiring, cabling, buses, or the like. In this regard, the interfaces 310 may be configured to support different communications protocols or different data formats corresponding to the respective type of avionics LRU 304 that is connected to a particular interface 310. For example, the FMC 302 may communicate navigation data from a navigation system via a navigation interface 310 coupled to a data bus supporting the ARINC 424 (or A424) standard, the ARINC 629 (or A629) standard, the ARINC 422 (or A422) standard, or the like. As another example, a datalink system or other communications LRU 304 may utilize an ARINC 619 (or A619) compatible avionics bus interface for communicating datalink communications or other communications data with the FMC 302.

The display device(s) 306 generally represent the electronic displays installed onboard the aircraft in the cockpit, and depending on the embodiment, could be realized as one or more monitors, screens, liquid crystal displays (LCDs), a light emitting diode (LED) displays, or any other suitable electronic display(s) capable of graphically displaying data and/or information provided by the FMC 302 via the display interface(s) 312. Similar to the avionics interfaces 310, the display interfaces 312 are realized as different ports, terminals, channels, connectors, or the like associated with the FMC 302 that are connected to different cockpit displays 306 via corresponding wiring, cabling, buses, or the like. In one or more embodiments, the display interfaces 312 are configured to support communications in accordance with the ARINC 661 (or A661) standard. In one embodiment, the FMC 302 communicates with a lateral map display device 306 using the ARINC 702 (or A702) standard.

In exemplary embodiments, the multifunction computing module 308 is realized as a multifunction control and display unit (MCDU) that includes one or more user interfaces, such as one or more input devices 320 and/or one or more display devices 322, a processing system 324, and a communications module 326. The MCDU 308 generally includes at least one user input device 320 that is coupled to the processing system 324 and capable of receiving inputs from a user, such as, for example, a keyboard, a key pad, a mouse, a joystick, a directional pad, a touchscreen, a touch panel, a motion sensor, or any other suitable user input device or combinations thereof. The display device(s) 322 may be realized as any sort of monitor, screen, LCD, LED display, or other suitable electronic display capable of graphically displaying data and/or information under control of the processing system 324.

The processing system 324 generally represents the hardware, circuitry, logic, firmware and/or other components of the MCDU 308 configured to perform the various tasks, operations, functions and/or operations described herein. Depending on the embodiment, the processing system 324 may be implemented or realized with a general purpose processor, a microprocessor, a controller, a microcontroller, a state machine, an application specific integrated circuit, a field programmable gate array, any suitable programmable logic device, discrete gate or transistor logic, discrete hardware components, or any combination thereof, designed to perform the functions described herein. Furthermore, the steps of a method or algorithm described in connection with the embodiments disclosed herein may be embodied directly in hardware, in firmware, in a software module executed by the processing system 324, or in any practical combination thereof. In this regard, the processing system 324 includes or accesses a data storage element (or memory), which may be realized using any sort of non-transitory short or long term storage media, and which is capable of storing code or other programming instructions for execution by the processing system 324. In exemplary embodiments described herein, the code or other computer-executable programming instructions, when read and executed by the processing system 324, cause the processing system 324 to implement or otherwise generate a flight management system application 330 and perform additional tasks, operations, functions, and processes described herein.

The communications module 326 generally represents the hardware, module, circuitry, software, firmware and/or combination thereof that is coupled between the processing system 324 and a communications interface 328 of the MCDU 308 and configured to support communications between the MCDU 308 and the FMC 302 via an electrical connection 329 between the MCDU communications interface 328 and the FMC communications interface 314. For example, in one embodiment, the communications module 326 is realized as an Ethernet card or adapter configured to support communications between the FMC 302 and the MCDU 308 via an Ethernet cable 329 provided between Ethernet ports 314, 328. In other embodiments, the communications module 326 is configured to support communications between the FMC 302 and the MCDU 308 in accordance with the ARINC 429 (A429) standard via an A429 data bus 329 provided between A429 ports 334, 328 of the respective modules 302, 308. In yet other embodiments, the communications module 326 is configured to support communications between the FMC 302 and the MCDU 308 in accordance with the ARINC 422 (A422) standard via an A422 data bus 329 provided between A422 ports 334, 328 of the respective modules 302, 308. In yet other embodiments, the communications module 326 is configured to support communications between the FMC 302 and the MCDU 308 in accordance with the ARINC 739 (A739) standard via an A739 data bus 329 provided between A739 ports 334, 328 of the respective modules 302, 308.

In various embodiments, the FMC 302 and MCDU 308 communicate using a different communications protocol or standard than one or more of the avionics LRUs 304 and/or the display devices 306. In such embodiments, to support communications of data between the MCDU 308 and those LRUs 304 and/or display devices 306, the data concentrator application 336 at the FMC 302 converts data from one format to another before retransmitting or relaying that data to its destination. For example, the data concentrator application 336 may convert data received from an avionics LRU 304 to the A429 or Ethernet format before providing the data to the MCDU 308, and vice versa. Additionally, in exemplary embodiments, the FMC 302 validates the data received from an avionics LRU 304 before transmitting the data to the MCDU 308. For example, the FMC 302 may perform debouncing, filtering, and range checking, and/or the like prior to converting and retransmitting data from an avionics LRU 304.

It should be noted that although the subject matter may be described herein in the context of the multifunction computing module 308 being realized as an MCDU, in alternative embodiments, the multifunction computing module 308 could be realized as an electronic flight bag (EFB) or other mobile or portable electronic device. In such embodiments, an EFB capable of supporting a FMS application 330 may be connected to a onboard FMC 302 using an Ethernet cable 329 to support flight management functionality from the EFB in an equivalent manner as described herein in the context of the MCDU.

In one or more embodiments, the MCDU 308 stores or otherwise maintains programming instructions, code, or other data for programming the FMC 302 and transmits or otherwise provides the programming instructions to the FMC 302 to update or otherwise modify the FMC 302 to implement the data concentrator application 336. For example, in some embodiments, upon establishment of the connection 329 between modules 302, 308, the MCDU 308 may automatically interact with the FMC 302 and transmit or otherwise provide the programming instructions to the FMC 302, which, in turn, executes the instructions to implement the data concentrator application 336. In some embodiments, the data concentrator application 336 may be implemented in lieu of flight management functionality by the MCDU 308 reprogramming the FMC 302. In other embodiments, the FMC 302 may support the data concentrator application 336 in parallel with flight management functions. In this regard, the FMC 302 may perform flight management functions, while the FMS application 330 on the MCDU 308 supplements the flight management functions to provide upgraded flight management functionality within the aircraft system 300.

The FMS allows creation of a SAR pattern which is graphically depicted on the cockpit display to carry out the SAR mission. Locating the object with respect to the SAR pattern being flown allows pilot to optimize the search operation and effectively report the location to the ACO of the mission. The FMS also provides an electronic system memory that stores the SAR pattern and object locations and associated data. Additionally, the FMS may automatically add distinct symbols that represent the object of interest in alternative embodiments. In other embodiments, the system may keep track of moving objects.

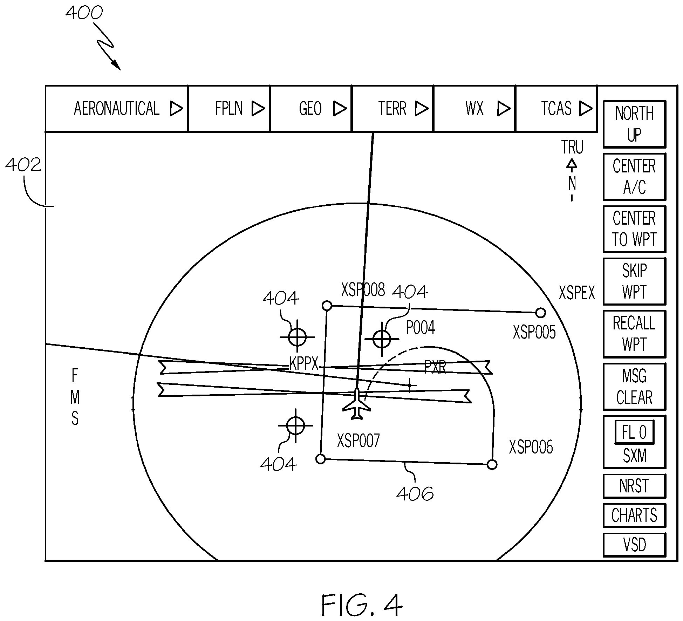

Figure 4 shows an image 400 of visual display 402 of the multiple objects 404 identified from the sensor(s) 208 as shown previously in Figure 2. In this embodiment the sensor is an IR camera. The camera image is shown on the visual display system 406 along with multiple other "probable objects" 404 found by the IR camera that are also depicted on the visual display 402 using a new symbology. The location of these objects 404 are extracted from the images captured using IR cameras onboard the aircraft.

An object of interest may be detected anywhere within the sensor's field of view. While the sensors are intended to search for objects within a designated SAR pattern, objects of interest located by the sensors outside the SAR pattern may be added to the visual display system. Although IR is the proposed sensor technology for this disclosure, other sensors could be used for the object tracking and selection procedure, not limited to radar (millimeter wave), light imaging detection and ranging (lidar), etc.

During operations, the IR camera detects multiple probable objects. The location of these objects will be identified from the camera picture and will be taken as input to the Visual display system. Distinct symbols will be added at the identified location on the Visual display system as "Probable Objects". The pilot will be provided an option to reject these symbols or keep them as identified objects, based on the type of search mission and visual cues as observed from the aircraft.

The visual display system allows placing of multiple markers for objects which will allow SAR pilots to keep track of several targets at once while undergoing operations. Furthermore, it would allow pilots to more accurately plan their visual navigation, identify the distance of targets for SAR, and keep track of moving objects for optimal path planning. The visual display system in conjunction with the sensors and the FMS allows a pilot to define and modify a SAR pattern to conduct a SAR mission. Each search pattern has multiple legs which pilot needs to follow in order to search specified region. Normally, search operation is carried out using infra-red (IR) cameras on board the aircraft as sensors. During the search mission, if an object(s) is/are found on one of the legs of the SAR pattern, Various embodiments of the system will automatically or manually mark the position identified by the sensor on a cockpit display system and co-relate the position with the SAR Pattern. Details about the objects are communicated to the ground based controller or Aircraft Coordinator (ACO) as well as to nearby aircraft also involved in the SAR mission.

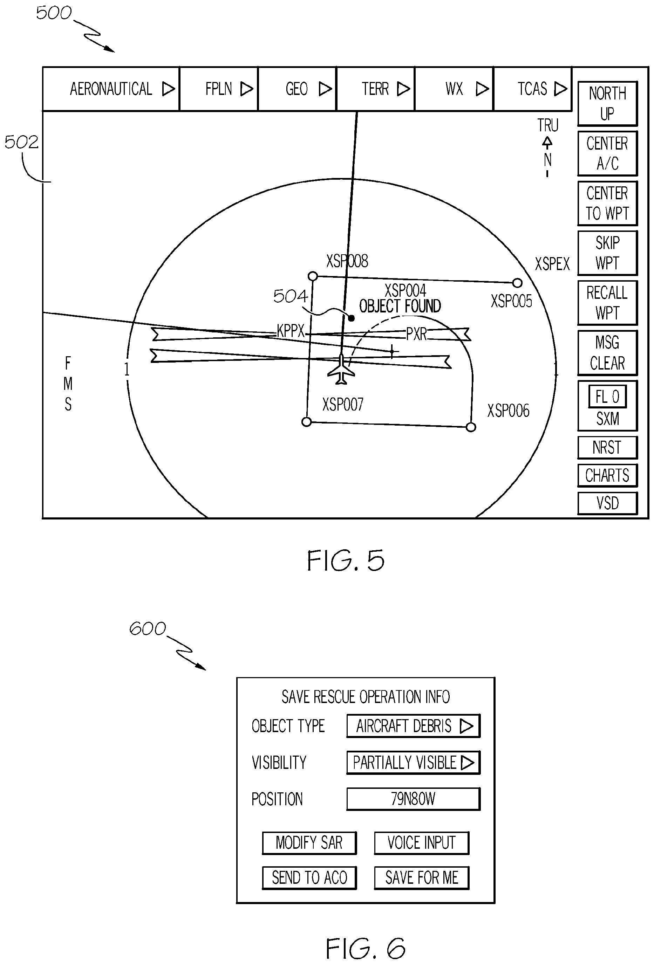

Figure 5 shows an image 500 with an identified object 504 displayed on the Visual display system 502 after the pilot's validation. Once confirmed by the pilot, the "probable object" symbol 404 (of Figure 4) will be displayed as an "object found" symbol 504. In addition to the location identified from the IR camera picture, the proposed method will provide another option for the pilot to select a location on the display and manually insert an "object found" symbol for an object found visually or by other means. In some embodiments, and object could be defined as aircraft debris, personnel on the ground in need of pickup, potential landing zones or locations for rescue aircraft, or any other objects or areas of interest to the operation.

Figure 6 shows a graphical user interface (GUI) 600 that may be used to input the additional details of the objects found 504 (in Figure 5) in one embodiment. The "object found" symbol added by camera or manually added by the pilot will be interactive. Once the pilot selects the "object found" symbol, the system will provide a dialog box in the GUI 600 for the pilot to add more information. In alternative embodiments, the information added may include: Object Type (Moving Object, Aircraft Debris, Personnel on Ground, Potential Landing Zone, etc.) Size of the Object (Small or Big), Shape of the Object (Regular, Irregular), Visibility of the Object (Partially Visible, Continuously Visible or Intermittently Visible), etc. In some embodiments, both automatic and user entered symbols may display values associated with the object or region of interest. The values may be relative or absolute representations of things such as altitude, distance from landmarks or reference points, potential landing zone dimensions, minimum accept landing areas, etc. For indicating potential landing areas, the symbol may change to reflect changing conditions on the ground that may impact the suitability of the landing zone such as weather, visibility, wind, etc. The symbols may also be changed to indicated that the objects or regions have been view and searched by the aircraft.

The pilot will be able to send the information to the ground station by selecting the "Send to ACO" button on the dialog box. The pilot may also modify the SAR pattern either manually or automatically with the FMS. The details added about the object found may be saved locally on board the aircraft. Additionally, an option will be provided to add the "Object Found" symbol and additional details through voice input. This will reduce the head down time for the pilot to add an "Object Found" manually.

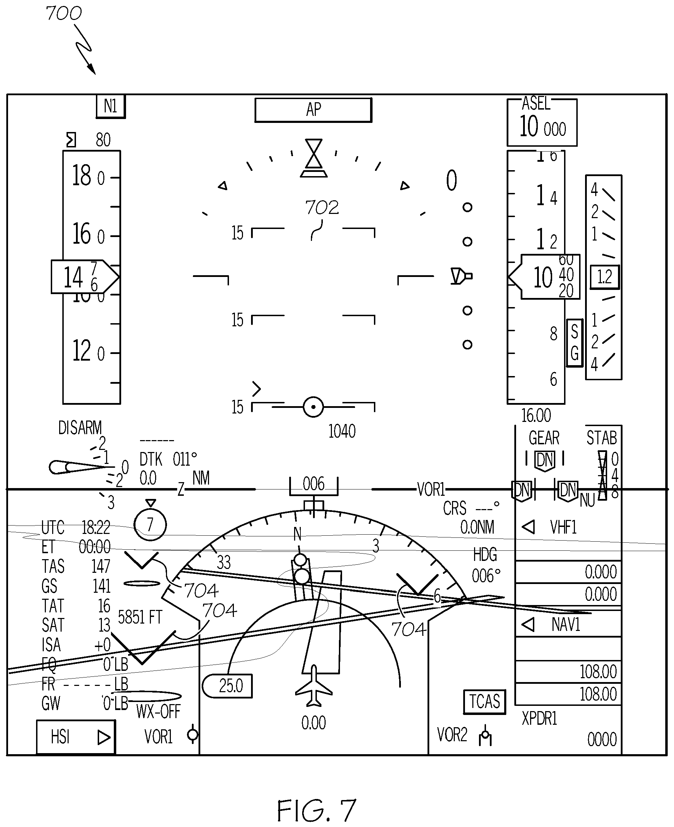

Figure 7 shows a depiction 700 of an advanced vision system (AVS) 702 with manually added probable objects 704. The AVS is an advanced primary flight display with synthetic and enhanced vision. An AVS may be used as the visual display system of the aircraft in some embodiments. Other embodiments allow an aircrew member to manually add identified objects using a ground tracing cursor on the AVS or other map display. Multiple objects can be placed simultaneously to mark multiple destinations or defined areas and can be inserted and removed independently. The identified object can be added on map displays to mark the location if it cannot be seen on the primary flight display (PFD) as well as keep track of symbols for later use. The identified objects that appear on the AVS are drawn in 3D, showing both the location of the target position, as well as the distance to the target. This provides additional functionality to reveal the targets even in an occluded position. The identified objects are designed to work with enhanced vision systems (EVS) and synthetic vision systems (SVS) and make use of the synthetic terrain. As shown in this embodiment, an image from the sensor (such as an IR image) is integrated onto the primary flight display. This allows the aircrew to fly to the object of interest or the area of interest in a precise manner using visual approach techniques. This uses more precise navigation to help avoid the aircraft overshooting the object and having to circle back around the object of interest.

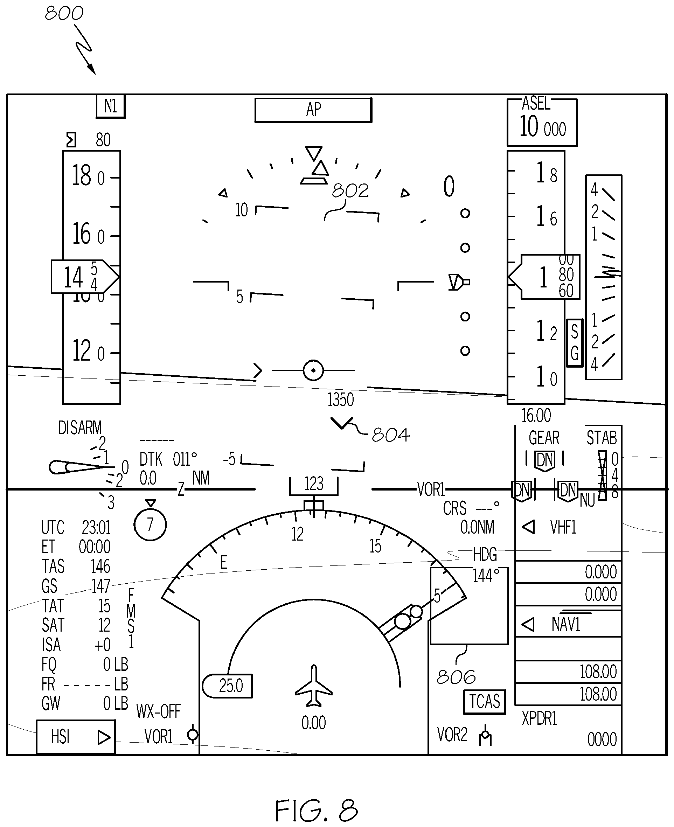

Figure 8 shows a depiction 800 of an AVS 802 with manually added region of interest 804. A "region of interest" is a larger geographical area that is to be searched as compared to an object of interest which is a single location. In addition to point object symbol placement, a region of interest can also be marked by allowing symbols to be placed using the IR images. The object selection in the IR image is projected to a latitude/longitude and altitude position on the ground. The region of interest in the IR image is maintained internally of the selected object for tracking purposes. In some embodiments, a region of interest and/or a manually entered object of interest may be maintained locally on board the aircraft by the visual display or an object tracking system. These regions are manually entered objects and are not automatically sent to the FMS.

As the object moves in the IR image, computer vision techniques are used to keep track and update the software of the objects current position. This allows SAR aircraft to place accurate markers on moving targets, such as boats or vehicles, as well as give a more accurate method to mark the distance to large objects, such as oil rigs or helipads. In some embodiments, multiple moving objects may be tracked and displayed simultaneously. The tracking mode also includes an object tracking window 806 (shown in grayscale in Figure 8) that allows pilots to have a window showing exactly what was selected and is currently being tracked, to ensure that they have selected and are continuing to track the intended target. The moving object is tracked by visual characteristics detected by the sensor. This aids in more precise navigation to the moving object. With visual tracking, the probable location of the object gets more accurate as the aircraft gets closer. In the event the target is no longer visible within the IR image, the last known latitude-longitude and altitude position is maintained, and/or augmented based on historical trajectory.

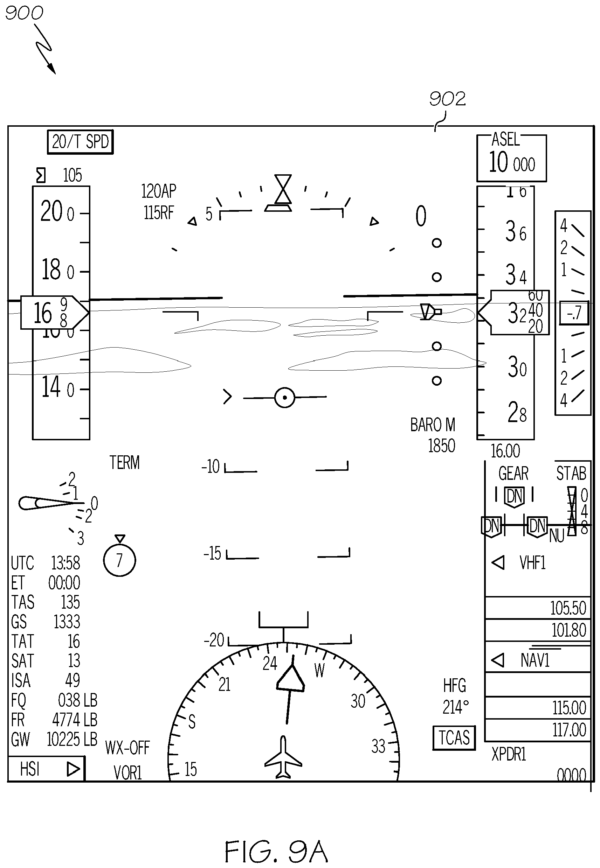

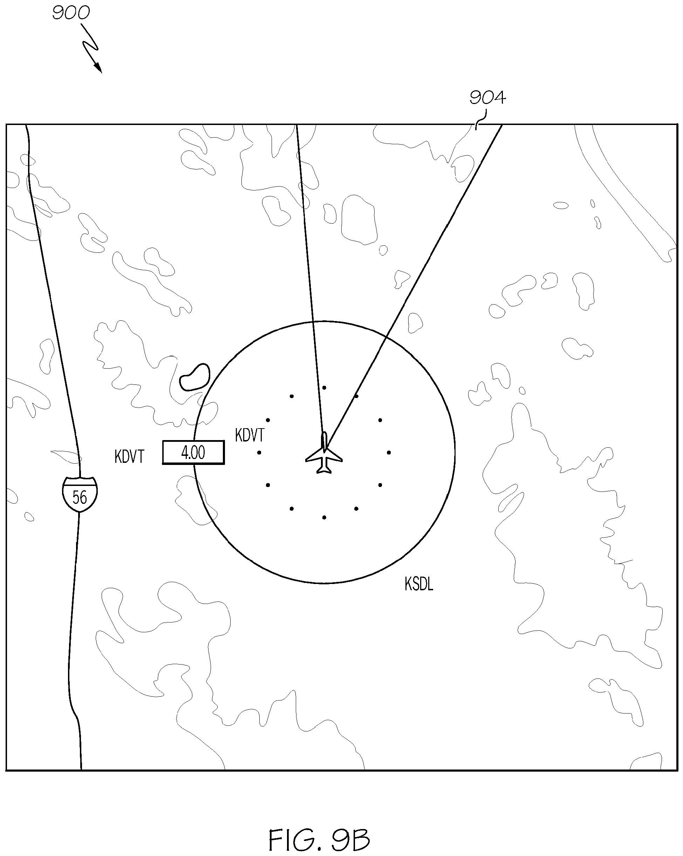

Figure 9A shows a depiction 900 of a display of an AVS 902 in tandem with Figure 9B which shows a lateral navigation (NAV) display 904. A series of target markers could be used to define an area or zone for search. The zone could be displayed on synthetic vision or a navigation display as a highlighted area that could also be augmented with potential search patterns. Any "object found" symbols that are inserted manually or automatically are synchronized between an SVS and any navigation displays. In other embodiments, a head-up display (HUD) or a head mounted display (HMD) may be used by a pilot or other aircrew member. In these embodiments, the symbols are synchronized between either the HUD or HMD and the navigational or SVS displays. This allows an identified object to be placed and continuously monitored even when the aircraft is not facing the target direction. As described previously, any identified object locations may be shared with another vehicle via a transponder, any other remotely connected system or the ACO. Manual entry of user detected objects or regions may be accomplished with the use of touchscreens for the displays, drag/drop with a controller, etc. This may be used with a PFD, HUD or NAV display. A targeting mechanism may be used with an HMD.

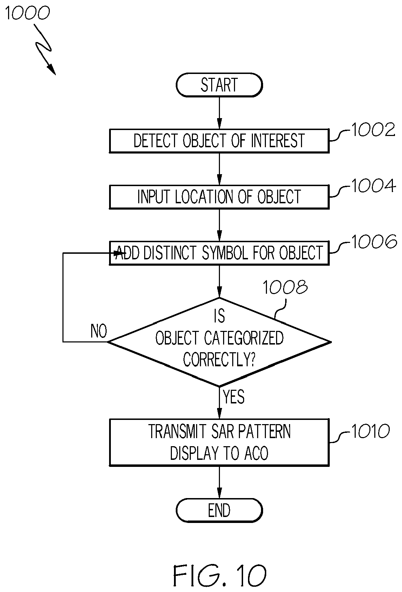

Figure 10 shows a flowchart 1000 for a method for identifying objects of interest during a SAR operation. First, a sensor onboard an aircraft detects an object of interest that is located within field of view of a sensor 1002. The location of the object of interest is input into a visual display system that is shown to an aircrew member on a visual display located onboard the aircraft 1004. The aircrew member may select the object of interest based on the sensor image. The location of the object of interest is input into the visual display system located onboard the aircraft, where the location of the object is translated as latitude, longitude and altitude from data from the sensor and the sensor image. Distinct symbols that categorize the object of interest are automatically added to the display 1006. The aircrew member confirms that the distinct symbols accurately categorize the object of interest 1008. If the aircrew member confirms that the distinct symbols are accurate, the contents of the visual display system along with the distinct symbols may be transmitted to a ground-based controller, an ACO or another aircraft 1010.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematic shown in FIG. 2 depicts one exemplary arrangement of elements, additional intervening elements, devices, features, or components may be present in an embodiment of the depicted subject matter.

In addition, certain terminology may also be used in the following description for the purpose of reference only, and thus are not intended to be limiting. For example, terms such as "upper", "lower", "above", and "below" refer to directions in the drawings to which reference is made. Terms such as "front", "back", "rear", "side", "outboard", and "inboard" describe the orientation and/or location of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second", and other such numerical terms referring to structures do not imply a sequence or order unless clearly indicated by the context.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

## Claims

1. A method for identifying objects of interest during an air search and rescue, SAR, operation, comprising:
detecting an object of interest with a sensor (104) onboard an aircraft (102), where the object of interest is located near an SAR pattern (406) of an aircraft;
displaying a sensor image of the object of interest on a visual display system;
inputting the location of the object of interest into the visual display system located onboard the aircraft, where the location of the object is translated as latitude, longitude and altitude from data from the sensor and the sensor image;
automatically adding a distinct symbol (404) at the input location on the visual display system (400, 500) that categorizes the object of interest as a probable object;
selecting the object of interest on the visual display system based on the sensor image, where the object of interest is selected by an aircrew member;
confirming the distinct symbol accurately categorizes the selected object of interest as a probable object or rejecting the categorization of the distinct symbol as a probable object, where the distinct symbol is confirmed or rejected by the aircrew member, and wherein a probable object symbol is changed to an object found symbol (500) when the distinct symbol is confirmed as accurately categorizing the object of interest as a probable object by the aircrew member; and
transmitting contents of the visual display system with the distinct symbols to a ground-based controller, an aircraft coordinator (ACO), or to other aircraft participating in the SAR operation.

2. The method of Claim 1, where the distinct symbols are automatically added with a Flight Management System, FMS.

3. The method of Claim 1, where the distinct symbols display the altitude of the object of interest.

4. The method of Claim 1, where the distinct symbols display the distance of the object of interest from a reference point.

5. The method of Claim 1, where the distinct symbols may be marked as viewed upon completion of an inspection of the object of interest by the aircraft.

6. The method of Claim 1, further comprising:
modifying the SAR pattern of the aircraft with the FMS based on the detected objects of interest.

7. The method of Claim 1, further comprising:
saving the location of the object of interest and the distinct symbols to an electronically readable memory of the FMS.

8. The method of Claim 1, further comprising:
tracking at least one moving object of interest with the sensor onboard the aircraft.

9. The method of Claim 1, further comprising:
inputting a region of interest into the visual display system, where the region of interest is manually identified and inputted by an aircrew member.

## Patentansprüche

1. Verfahren zum Identifizieren von Objekten von Interesse während eines Such- und Rettungseinsatzes, SAR-Einsatzes (SAR = search and rescue), aus der Luft, umfassend:
Erfassen eines Objekts von Interesse mit einem Sensor (104) an Bord eines Luftfahrzeugs (102), wobei sich das Objekt von Interesse nahe einem SAR-Muster (406) eines Luftfahrzeugs befindet;
Anzeigen eines Sensorbildes des Objekts von Interesse auf einem visuellen Anzeigesystem;
Eingeben des Standorts des Objekts von Interesse in das visuelle Anzeigesystem, das sich an Bord des Luftfahrzeugs befindet, wobei der Standort des Objekts aus Daten von dem Sensor und dem Sensorbild als Breitengrad, Längengrad und Höhe über dem Meeresspiegel übersetzt wird;
automatisches Hinzufügen eines eindeutigen Symbols (404) an dem Eingabestandort auf dem visuellen Anzeigensystem (400, 500), das das Objekt von Interesse als ein wahrscheinliches Objekt kategorisiert;
Auswählen des Objekts von Interesse auf dem visuellen Anzeigensystem basierend auf dem Sensorbild, wobei das Objekt von Interesse durch ein Luftfahrzeugbesatzungsmitglied ausgewählt wird;
Bestätigen, dass das eindeutige Symbol das ausgewählte Objekt von Interesse genau als ein wahrscheinliches Objekt kategorisiert, oder Zurückweisen der Kategorisierung des eindeutigen Symbols als ein wahrscheinliches Objekt, wobei das eindeutige Symbol durch das Luftfahrzeugbesatzungsmitglied bestätigt oder zurückgewiesen wird und wobei ein Symbol eines wahrscheinlichen Objekts in ein Symbol eines gefundenen Objekts (500) geändert wird, wenn das eindeutige Symbol als das Objekt von Interesse durch das Luftfahrzeugbesatzungsmitglied als genaue Kategorisierung des wahrscheinlichen Objekts bestätigt wird; und
Übertragen von Inhalten des visuellen Anzeigensystems mit den eindeutigen Symbolen zu einem Lotsen am Boden, einem Luftfahrzeugkoordinator (aircraft coordinator, ACO) oder zu anderen an dem SAR-Einsatz beteiligten Luftfahrzeugen.

2. Verfahren nach Anspruch 1, wobei die eindeutigen Symbole automatisch mit einem Flight Management System, FMS, hinzugefügt werden.

3. Verfahren nach Anspruch 1, wobei die eindeutigen Symbole die Höhe über dem Meeresspiegel des Objekts von Interesse anzeigen.

4. Verfahren nach Anspruch 1, wobei die eindeutigen Symbole die Distanz des Objekts von Interesse von einem Referenzpunkt anzeigen.

5. Verfahren nach Anspruch 1, wobei die eindeutigen Symbole bei Abschluss einer Inspektion des Objekts von Interesse durch das Luftfahrzeug als gesehen gekennzeichnet werden können.

6. Verfahren nach Anspruch 1, ferner umfassend:
Modifizieren des SAR-Musters des Luftfahrzeugs mit dem FMS basierend auf den erfassten Objekten von Interesse.

7. Verfahren nach Anspruch 1, ferner umfassend:
Speichern des Standorts des Objekts von Interesse und der eindeutigen Symbole in einem elektronisch lesbaren Speicher des FMS.

8. Verfahren nach Anspruch 1, ferner umfassend:
Verfolgen mindestens eines sich bewegenden Objekts von Interesse mit dem Sensor an Bord des Luftfahrzeugs.

9. Verfahren nach Anspruch 1, ferner umfassend:
Eingeben eines Bereichs von Interesse in das visuelle Anzeigesystem, wobei der Bereich von Interesse manuell identifiziert und durch ein Luftfahrzeugbesatzungsmitglied eingegeben wird.

## Revendications

1. Procédé d'identification d'objets d'intérêt pendant une opération aérienne de recherche et de sauvetage, SAR, comprenant :
la détection d'un objet d'intérêt à l'aide d'un capteur (104) à bord d'un aéronef (102), l'objet d'intérêt étant situé près d'un modèle de SAR (406) d'un aéronef ;
l'affichage d'une image de capteur de l'objet d'intérêt sur un système d'affichage visuel ;
l'entrée de la localisation de l'objet d'intérêt dans le système d'affichage visuel situé à bord de l'aéronef, la localisation de l'objet se traduisant sous forme de latitude, de longitude et d'altitude à partir de données du capteur et de l'image de capteur ;
l'ajout automatique d'un symbole distinct (404) à la localisation d'entrée sur le système d'affichage visuel (400, 500) qui catégorise l'objet d'intérêt en tant qu'objet probable ;
la sélection de l'objet d'intérêt sur le système d'affichage visuel selon l'image de capteur, l'objet d'intérêt étant sélectionné par un membre du personnel navigant ;
la confirmation du symbole distinct catégorise précisément l'objet d'intérêt sélectionné en tant qu'objet probable ou le rejet de la catégorisation du symbole distinct en tant qu'objet probable, le symbole distinct étant confirmé ou rejeté par le membre du personnel navigant et un symbole d'objet probable devenant un symbole d'objet trouvé (500) lorsque le symbole distinct est confirmé comme catégorisant précisément l'objet d'intérêt en tant qu'objet probable par le membre du personnel navigant ; et
la transmission de contenus du système d'affichage visuel à l'aide des symboles distincts à un contrôleur basé au sol, à un coordinateur d'aéronef (ACO) ou d'un autre aéronef participant à l'opération de SAR.

2. Procédé selon la revendication 1, dans lequel les symboles distincts sont automatiquement ajoutés avec un système de gestion de vols, FMS.

3. Procédé selon la revendication 1, dans lequel les symboles distincts affichent l'altitude de l'objet d'intérêt.

4. Procédé selon la revendication 1, dans lequel les symboles distincts affichent la distance de l'objet d'intérêt à partir d'un point de référence.

5. Procédé selon la revendication 1, dans lequel les symboles distincts peuvent être marqués tels que visualisés en fin d'inspection de l'objet d'intérêt par l'aéronef.

6. Procédé selon la revendication 1, comprenant en outre :
la modification du modèle de SAR de l'aéronef par le FMS selon les objets détectés d'intérêt.

7. Procédé selon la revendication 1, comprenant en outre :
la sauvegarde de la localisation de l'objet d'intérêt et des symboles distincts dans une mémoire à lecture électronique du FMS.

8. Procédé selon la revendication 1, comprenant en outre :
le suivi d'au moins un objet mobile d'intérêt par le capteur situé à bord de l'aéronef.

9. Procédé selon la revendication 1, comprenant en outre :
l'entrée d'une zone d'intérêt dans le système d'affichage visuel, la zone d'intérêt étant manuellement identifiée et entrée par un membre du personnel navigant.
